# DEMANDE DE BREVET EUROPEEN

(11) **EP 4 556 416 A1**
(43) Date de publication de la demande: **21.05.2025**
(21) Numéro de dépôt: 24209357.3
(22) Date de dépôt: 29.10.2024
(51) Int. Cl.: B65G 69/00, B65G 69/28

(54) **PROCÉDÉ DE COMMANDE D'UN ÉQUIPEMENT DE QUAI DE CHARGEMENT ET DISPOSITIF DE COMMANDE ASSOCIÉ**

(30) Priorité: 20.11.2023 FR 2312752
(71) Demandeur: Jean Chereau SAS, 50220 Ducey (FR)
(72) Inventeur: THIERRY, Franklin, 50220 DUCEY-LES-CHERIS (FR); BIGOT, Vincent, 50220 DUCEY-LES-CHERIS (FR)
(74) Mandataire: Casalonga

(57) **Abrégé**

Un dispositif de commande d'un équipement (3) de quai de chargement (1) qui est mobile entre une position de non-utilisation et une position de chargement/déchargement est proposé.

Le dispositif comprend :
- des premiers moyens de détection (10) disposés sur le quai de chargement,
- des moyens d'émission (8) disposés sur le quai,
- des moyens de réception (9) disposés sur le quai,
- des moyens de contrôle (6) du quai,
- une interface homme machine (13),
- des deuxièmes moyens de détection (11),
- des moyens de commande à actionnement manuel (4).

## Description

La présente invention concerne le domaine des véhicules routiers de transport de marchandises, tels que des semi-remorques, des remorques ou des porteurs, et plus particulièrement un dispositif de commande d'un équipement d'un quai de chargement et un procédé associé.

Classiquement, un véhicule routier de transport de marchandises est accosté à un quai de chargement d'un entrepôt pour charger ou décharger des marchandises contenues dans le véhicule routier.

Lors de ces opérations, un chargeur transborde les marchandises entre le véhicule routier et l'entrepôt.

Afin d'empêcher la chute du chargeur entre le quai de chargement et le véhicule pendant les opérations de chargement et déchargement, il est nécessaire d'empêcher un éventuel déplacement du véhicule routier et de valider sa position.

Dans ce but, il est possible d'actionner des moyens d'immobilisation du véhicule routier lorsqu'un rideau du quai de chargement a été relevé en vue de ces opérations de chargement/déchargement des marchandises. Pour plus de détails, on pourra par exemple se référer à la demande de brevet FR 3 111 340 (Chéreau).

Dans cette solution antérieure, le quai de chargement est équipé de moyens d'émission, et le véhicule est équipé de moyens de contrôle des moyens d'immobilisation.

Les moyens d'émission émettent un signal d'activation électromagnétique lors de l'ouverture du rideau du quai, et à la réception de ce signal les moyens de contrôle immobilisent le véhicule.

Cependant, avec cette solution antérieure, le rideau du quai de chargement se relève indépendamment de la présence d'un véhicule accosté au quai et nécessite par ailleurs que le véhicule routier soit équipé de moyens de contrôle des moyens d'immobilisation interagissant avec les moyens d'émission du quai.

Si le véhicule routier n'est pas équipé de moyens de contrôle, le véhicule routier est susceptible d'être déplacé lorsque le rideau de quai est ouvert.

Dès lors, un opérateur peut chuter du quai de chargement si aucun véhicule n'est accosté ou lorsque le véhicule routier se déplace.

La présente invention vise à remédier à ces inconvénients.

L'invention a pour objet un procédé de commande d'un équipement de quai de chargement qui est mobile entre une position de non-utilisation et une position de chargement/déchargement.

Le procédé comprend :
- une étape de détection d'un véhicule routier de transport de marchandises par des premiers moyens de détection disposés sur le quai de chargement.

Le procédé comprend en outre :
- une étape d'émission d'un signal d'initialisation par des moyens d'émission disposés sur le quai lorsque le véhicule routier est détecté par les moyens de détection,
- une étape d'émission d'un premier signal par des moyens de contrôle du déplacement de l'équipement disposés sur le quai lorsque des moyens de réception disposés sur le quai ne réceptionnent pas un signal d'identification émis par le véhicule en réponse au signal d'initialisation pendant une durée prédéterminée qui débute à l'émission dudit signal d'initialisation,
- après la réception du premier signal par une interface homme machine, une étape d'immobilisation manuelle du véhicule,
- une émission d'un signal de blocage par des deuxièmes moyens de détection lorsque le véhicule est immobilisé,
- une étape d'actionnement manuel de moyens de commande à actionnement manuel pour commander le déplacement de l'équipement de la position de non-utilisation vers la position de chargement/déchargement, et
- une étape de déplacement de l'équipement vers la position de chargement/déchargement lors de l'actionnement manuel des moyens de commande, uniquement si signal de blocage est reçu par les moyens de contrôle du quai et si la distance minimale entre le véhicule et le quai déterminée par les moyens de détection est inférieure ou égale à une distance de détection prédéterminée.

Par « distance minimale entre le véhicule et le quai », on entend la distance la plus petite qui existe entre le quai et le véhicule, cette distance étant généralement entre le quai et les rouleaux ou butoirs d'accostage du véhicule.

Avec le procédé de l'invention, le déplacement de l'équipement vers sa position de chargement/déchargement est réalisé uniquement si un véhicule routier de transport de marchandises est présent devant le quai et si ce véhicule est immobilisé. Ainsi, la probabilité de chute du quai de l'opérateur est fortement réduite.

En outre, l'ouverture du rideau est possible alors que le véhicule routier n'est pas équipé de moyens de contrôle interagissant avec les moyens de contrôle du quai.

Avantageusement, le signal d'initialisation est émis par les moyens d'émission disposés sur le quai lorsqu'en outre la distance minimale déterminée par les moyens de détection est inférieure ou égale à la distance de détection prédéterminée.

De préférence, l'étape d'immobilisation manuelle du véhicule comprend la mise en oeuvre de moyens assurant le blocage en position du véhicule.

Selon une première conception, l'étape d'immobilisation manuelle comprend l'insertion de la clé de démarrage du véhicule dans une boîte à clé disposé sur le quai, la fermeture de la boîte à clé et l'émission du signal de blocage par les deuxièmes moyens de détection incorporés dans la boîte à clé lorsque la clé est à l'intérieur de la boîte à clé et la boîte à clé est verrouillée.

La clé peut comprendre une carte électronique ou une clé physique comportant des encoches.

Selon une deuxième conception, l'étape d'immobilisation manuelle comprend le montage d'au moins une cale contre des roues du véhicule, et l'émission du signal de blocage par les deuxièmes moyens de détection disposés sur ladite cale lorsque la cale est en contact avec ladite roue.

Selon une troisième conception, l'étape d'immobilisation manuelle comprend l'insertion d'au moins un crochet fixé au quai sur une barre anti-encastrement du véhicule et l'émission du signal de blocage par les deuxièmes moyens de détection disposé sur ledit crochet lorsque le crochet est accroché à la barre anti-encastrement.

Selon une quatrième conception, l'étape d'immobilisation manuelle comprend la disposition d'une barre entre deux roues du véhicule, et l'émission du signal de blocage par les deuxièmes moyens de détection disposés sur ladite barre d'essieu lorsque la barre d'essieu est disposée entre les deux roues.

Selon une cinquième conception, l'étape d'immobilisation manuelle comprend le montage de la clé de démarrage du véhicule sur un crochet disposé sur l'équipement et l'émission du signal de blocage par les deuxièmes moyens de détection disposé sur le crochet lorsque la clé est montée sur le crochet.

Avantageusement, les moyens de détection délivrent un signal d'alarme lorsque la valeur absolue de la dérivée temporelle de la distance entre le véhicule accosté au quai et immobilisé est supérieure à un seuil d'alarme prédéterminé.

De préférence, les moyens de détection déterminent en permanence la distance minimale entre le véhicule et le quai.

L'équipement du quai de chargement peut comprendre un rideau de fermeture de l'accès au quai de chargement mobile entre une position ouverte de chargement/déchargement et une position fermée abaissée de non-utilisation.

Alternativement, l'équipement du quai de chargement comprend une passerelle de chargement mobile entre une position abaissée horizontale de chargement/déchargement et une position relevée rangée de non-utilisation.

L'invention concerne également un dispositif de commande d'un équipement de quai de chargement qui est mobile entre une position de non-utilisation et une position de chargement/déchargement.

Le dispositif comprend :
- des premiers moyens de détection disposés sur le quai de chargement et configurés pour détecter un véhicule routier de transport de marchandises et le quai,
- des moyens d'émission disposés sur le quai et configurés pour émettre un signal d'initialisation lorsque le véhicule routier est détecté par les moyens de détection,
- des moyens de réception disposés sur le quai,
- des moyens de contrôle du déplacement de l'équipement qui sont disposés sur le quai et configurés pour émettre un premier signal lorsque les moyens de réception disposés sur le quai ne réceptionnent pas un signal d'identification émis par le véhicule en réponse au signal d'initialisation pendant une durée prédéterminée qui débute à l'émission dudit signal d'initialisation,
- une interface homme machine configurée pour recevoir le premier signal et interagir avec un opérateur du quai,
- des deuxièmes moyens de détection configurés pour émettre un signal de blocage lorsque le véhicule est immobilisé,
- des moyens de commande à actionnement manuel disposés sur le quai et configurés pour commander le déplacement de l'équipement de la position de non-utilisation vers la position de chargement/déchargement,
- les moyens de contrôle du déplacement de l'équipement étant en outre configurés pour rendre opérant l'actionnement manuel des moyens de commande pour déplacer l'équipement de la position de non-utilisation vers la position de chargement/déchargement, lorsque le signal de blocage a été réceptionné par les moyens de contrôle du quai et si la distance minimale entre le véhicule et le quai déterminée par les moyens de détection est inférieure ou égale à une distance de détection prédéterminée.

De préférence, le dispositif comprend en outre des moyens à actionnement manuel assurant le blocage en position du véhicule.

La présente invention sera mieux comprise à l'étude de la description détaillée de modes de réalisation pris à titre d'exemples nullement limitatifs et illustrés par les dessins annexés, sur lesquels :

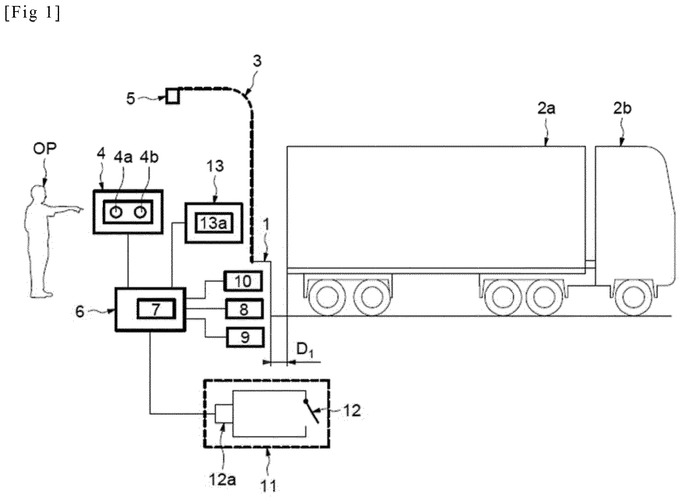

[Fig 1] illustre schématiquement un exemple de réalisation d'un véhicule routier de transport de marchandises lors de la mise à quai selon l'invention ;
[Fig 2]
[Fig 3] illustre schématiquement un procédé de commande d'un rideau de fermeture de l'accès au quai de chargement selon l'invention ;
[Fig 4] illustre schématiquement un deuxième exemple de moyens de blocage d'un véhicule routier de transport de marchandises selon l'invention ;
[Fig 5] illustre schématiquement un troisième exemple de moyens de blocage d'un véhicule routier de transport de marchandises selon l'invention ;
[Fig 6] illustre schématiquement un quatrième exemple de moyens de blocage d'un véhicule routier de transport de marchandises selon l'invention ; et
[Fig 7] illustre schématiquement un cinquième exemple de moyens de blocage d'un véhicule routier de transport de marchandises selon l'invention.

La figure 1 illustre schématiquement un véhicule routier de transport de marchandises lors de l'accostage dudit véhicule à un quai de chargement 1.

Le véhicule routier est ici une semi-remorque 2a reliée à un tracteur 2b.

En variante, le véhicule routier pourrait être une semi-remorque seule, une remorque ou un porteur.

Le quai de chargement 1 est équipé d'un rideau de fermeture 3 de l'accès au quai de chargement mobile entre une position fermée abaissée et une position ouverte relevée pour le chargement et le déchargement. La position entièrement ouverte ou partiellement ouverte du rideau 3 correspond à une position de chargement/déchargement, et la position fermée du rideau correspond à une position de non-utilisation. Sur la figure 1, le rideau 3 est en position fermée.

Le quai de chargement 1 comprend également des moyens de commande 4 à actionnement manuel pour commander le déplacement du rideau 3. De manière connue en soi, le rideau 3 est équipé d'un moyen d'entraînement (non représenté), par exemple un moteur électrique pour permettre son déplacement entre la position de chargement/déchargement et la position de non-utilisation, et inversement. Une unité de contrôle 5 est également prévue pour le pilotage du moyen d'entraînement du rideau 3.

Les moyens de commande 4 du rideau peuvent par exemple être prévus du côté intérieur de l'entrepôt équipé du quai de chargement 1. Les moyens de commande 4 peuvent par exemple comprendre un premier bouton-poussoir 4a pour que l'utilisateur du quai puisse commander l'ouverture du rideau 3, et un deuxième bouton-poussoir 4b pour commander la fermeture de ce dernier. Les moyens de commande 4 peuvent par exemple se présenter sous la forme d'un boitier positionné sur un mur de l'entrepôt ou sous la forme d'une télécommande.

Le quai de chargement 1 comprend en outre des moyens de contrôle 6 comportant un compteur 7. Les moyens de contrôle 6 sont en outre reliés aux moyens de commande 4 et à l'unité de contrôle 5.

Le quai de chargement 1 comprend en outre des moyens d'émission 8 et des moyens de réception 9 reliés aux moyens de contrôle 6, et des premiers moyens de détection 10 reliés aux moyens de contrôle 6.

Les moyens de contrôle 6 sont reliés aux moyens de commande 4 par une connexion qui est par exemple de type filaire ou radioélectrique ou encore réalisée par l'intermédiaire d'un bus de communication.

Les moyens de contrôle 6 comprennent par exemple une unité de traitement.

Les moyens d'émission 8 et de réception 9 peuvent être réalisés sous la forme de deux boitiers séparés tel que représenté ou d'un boitier unique.

Les premiers moyens de détection 10 sont aptes à détecter la présence de la semi-remorque 2. Dans l'exemple de réalisation illustré, les moyens de détection 10 sont également aptes à déterminer la distance minimale entre la semi-remorque 2a et le quai 1.

Les premiers moyens de détection 10 comprennent par exemple un radar à ultrasons.

Les premiers moyens de détection 10 peuvent détecter et déterminer la distance minimale à partir d'autres technologies en mettant en oeuvre des technologies optiques implémentant par exemple un laser.

Les moyens d'émission 8 disposés sur le quai 1 sont aptes à émettre un signal d'initialisation Sinit lorsqu'un véhicule routier est détecté par les moyens de détection 10.

Comme cela sera décrit plus en détail par la suite, les moyens de contrôle 6 disposés sur le quai 1 sont aptes à rendre inopérant l'actionnement manuel des moyens de commande 4 lorsqu'un signal de blocage Sb n'a pas été réceptionné par les moyens de contrôle 6 du quai 1 ou lorsque la distance minimale entre la semi-remorque 2a et le quai 1 déterminée par les moyens de détection 10 est supérieure à une distance de détection prédéterminée.

La distance de détection prédéterminée est choisie selon la configuration du quai 1 et peut par exemple être égale à 40 cm, 50 cm ou un mètre.

Sur la figure 1, la semi-remorque 2 est représentée dans une position de mise à quai par rapport au quai de chargement 1. La distance entre l'extrémité la plus proche de la semi-remorque 2 et la quai 1 est référencée Di. Cette distance Di est la distance minimale entre la semi-remorque 2 et le quai 1.

Comme cela sera également décrit plus en détail par la suite, les moyens de contrôle 6 disposés sur le quai 1 sont en outre aptes à délivrer, après actionnement des moyens de commande 4, un signal de commande pour le déplacement de l'équipement 3 de la position de non-utilisation vers la position de chargement/déchargement uniquement si le signal de blocage Sb a été réceptionné par les moyens de contrôle 6 du quai 1 et si la distance minimale entre la semi-remorque 2a et le quai 1 déterminée par les moyens de détection 10 est inférieure ou égale à la distance de détection prédéterminée.

Dans cet exemple de réalisation, des moyens 11 à actionnement manuel assurant le blocage en position de la semi-remorque 2a sont disposés sur le quai 1.

Ces moyens 11 comprennent des deuxièmes moyens de détection aptes à émettre un signal de blocage lorsque la semi-remorque 2a est immobilisée.

Les moyens 11 comportent par exemple une boîte à clé 12 disposée sur le quai 1.

La boîte à clé 12 comprend les deuxièmes moyens de détection 12a aptes à émettre le signal de blocage Sb lorsque les deuxièmes moyens de détection 12a détectent la présence d'une clé à l'intérieur de ladite boîte et que ladite boîte est verrouillée de sorte que la clé ne peut pas être retirée de ladite boîte 12.

Le quai comprend en outre une interface homme machine 13 apte à recevoir un premier signal émis par les moyens de contrôle 6 et à interagir avec un opérateur OP du quai 1.

L'interface homme machine 13 comprend par exemple un voyant lumineux 13a.

Les moyens de contrôle 6, les moyens d'émission 8, les moyens de réception 9, les premiers moyens de détection 10, l'interface homme machine 13, les deuxièmes moyens de détection 12a et les moyens de commande à actionnement manuel 4 forment un dispositif de commande du rideau 3 de quai de chargement 1.

Les moyens d'émission 8 du quai 1 comprennent par exemple un dispositif d'émission du type identification par radiofréquence RFID « Radio Frequency Identification » en anglais et les moyens de réception 9 du quai 1 comprennent par exemple un dispositif de réception du type identification par radiofréquence RFID.

Le signal d'initialisation Sinit est par exemple du type radio.

Bien entendu, les moyens d'émission 8 et les moyens de réception 9 peuvent mettre en oeuvre un autre protocole de communication.

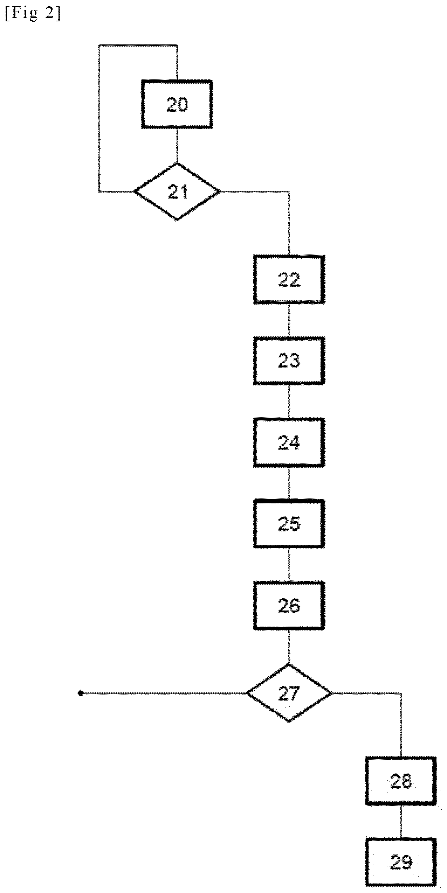

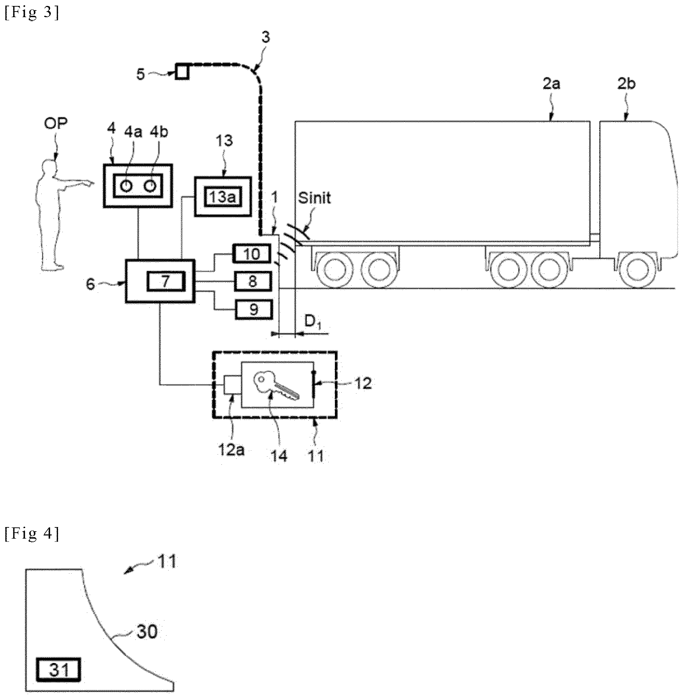

On va maintenant décrire en référence aux figures 2 et 3, le procédé de commande du rideau 3 de fermeture de l'accès au quai 1 de chargement.

Les premiers moyens de détection 10 du quai, qui fonctionnent en permanence, détectent la présence de la semi-remorque 2 et déterminent la distance minimale entre celle-ci et le quai 1. Cette distance minimale est déterminée en permanence par les moyens de détection 10 lors du procédé.

Le rideau 3 est en position fermée dans la position de non-utilisation empêchant l'accès au quai 1 de chargement.

On suppose que la semi-remorque 2 s'approche du quai 1 de chargement.

Lorsque les premiers moyens de détection 10 détectent la présence de la semi-remorque 2a à proximité du quai 1, les moyens de détection 10 déterminent la distance Di (étape 20).

Si la distance Di déterminée est supérieure à la distance de détection prédéterminée (étape 21), le procédé se poursuit à l'étape 20.

Lorsque les premiers moyens de détection 10 déterminent que la distance Di est inférieure ou égale à la distance de détection prédéterminée (étape 21), le procédé se poursuit par une étape 22 durant laquelle les moyens d'émission 8 du quai 1 émettent le signal d'initialisation Sinit et les moyens de contrôle 6 déclenchent le compteur 7.

Si le véhicule routier ne comprend pas de moyens de réception du signal d'initialisation Sinit ou que les moyens de réception du signal d'initialisation Sinit sont défaillants, le véhicule n'émet aucun signal en réponse à l'émission du signal d'initialisation Sinit.

Lorsque le compteur 7 atteint une durée prédéterminée débutant à l'émission du signal d'initialisation Sinit et les moyens de réception 9 ne réceptionnent pas un signal émis par le véhicule en réponse au signal d'initialisation Sinit, les moyens de contrôle 6 émettent un premier signal S1 durant une étape 23. La durée prédéterminée est par exemple égale à trente secondes.

Le premier signal S1 est transmis à l'interface homme machine 13 pour informer l'opérateur OP que le véhicule routier n'est pas apte à communiquer avec les moyens d'émission 8 et de réception 9.

Par exemple, à la réception du premier signal S1, le voyant 13a change de couleur.

Durant une étape 24, lorsque l'opérateur OP détecte que l'interface homme machine 13 a réceptionné le premier signal S1, par exemple par le changement de couleur du voyant 13a, l'opérateur OP immobilise manuellement le véhicule routier.

L'opérateur OP insert la clé de démarrage 14 du tracteur 2b du véhicule routier dans la boîte à clé 12 du quai 1, et la ferme ensuite.

Durant une étape 25, lorsque les deuxièmes moyens de détection 12a détectent que la clé de démarrage 14 est à l'intérieur de la boîte 12 à clé et la boîte à clé est verrouillée, les moyens de détection 12a émettent le signal de blocage Sb représentatif de l'immobilisation du véhicule.

En l'espèce, lorsque les moyens de détection 12a de la boîte 12 détectent la présence de la clé 14 à l'intérieur de la boîte 12 verrouillée de sorte que la clé 14 ne peut pas être retirée de la boîte à clé 12, lesdits moyens 12a délivrent le signal de blocage Sb.

Les deuxièmes moyens de détection 12a comportent par exemple un capteur de détection de présence d'une clé.

Comme la clé de démarrage 14 n'est plus accessible, il n'est pas possible de démarrer le tracteur 2b de sorte que le véhicule routier est considéré comme étant immobilisé.

Durant une étape 26, un opérateur OP actionne les moyens de commande 4 en appuyant sur le premier bouton 4a pour commander l'ouverture du rideau 3.

Un signal de commande de l'ouverture du rideau est transmis aux moyens de contrôle 6 du quai 2.

Si le signal de blocage Sb n'a pas été réceptionné par les moyens de contrôle 6 du quai 1, ou si la distance minimale n'est plus inférieure ou égale à la distance de détection prédéterminée (étape 27), le procédé s'arrête et le rideau 3 reste fermé.

Si les moyens de contrôle 6 du quai 1 ont réceptionnés le signal de blocage Sb (étape 27) et si la distance minimale est toujours inférieure ou égale à la distance de détection prédéterminée, durant une étape 28, les moyens de contrôle 6 transmettent l'ordre de commande manuel de l'opérateur OP via l'actionnement des moyens de commande 4 à l'unité de contrôle 5 pour l'ouverture du rideau 3. Comme indiqué précédemment, la détermination de la distance minimale entre la semi-remorque et le quai 1 est déterminée, dans ce procédé, en permanence par les moyens de détection 10 lors du procédé. Alternativement, il pourrait être possible de prévoir une première détermination de la distance minimale à l'étape 20 et une deuxième détermination de la distance minimale à l'étape 27, les moyens de détection 10 étant inactifs entre les étapes 20 et 27.

Le rideau 3 est déplacé vers la position de chargement/déchargement uniquement si les moyens de contrôle 6 du quai 1 ont réceptionnés le signal de blocage Sb et si la distance minimale est toujours inférieure ou égale à la distance de détection prédéterminée.

A la fin des opérations de chargement/déchargement (étape 29), lorsque l'opérateur OP actionne le deuxième bouton 4b des moyens de commande 4 pour la fermeture du rideau 3, les moyens de commande 4 émettent un signal de commande de la fermeture du rideau qui est transmis aux moyens de contrôle 6 du quai 1.

A la réception du signal de commande de la fermeture du rideau 3, les moyens de contrôle 6 du quai 1 émettent un signal de commande qui est délivré à l'unité de contrôle 5 pour piloter la fermeture du rideau 3.

Lorsque le rideau 3 est en position fermée, les moyens de contrôle 6 du quai 2 émettent un signal de déverrouillage Sdev autorisant l'ouverture de la boîte à clé 12.

En outre, lorsque le rideau 3 est en position ouverte, les moyens de détection 9 mesurent toujours la distance Di.

Si la valeur absolue de la dérivée temporelle de la distance entre la semi-remorque 2 accosté au quai 1 et immobilisé est supérieure à un seuil d'alarme prédéterminé, les moyens de détection 9 délivrent un signal d'alarme aux moyens de contrôle 6 du quai 1.

Les moyens de contrôle 6 du quai 1 commandent l'interface homme machine 13 pour informer les opérateurs présents à proximité du quai 1 que la semi-remorque 2 n'est plus immobilisée.

Le déplacement de l'équipement vers sa position de chargement/déchargement est réalisé uniquement si la distance minimale entre la semi-remorque 2a et le quai déterminée par les moyens de détection est inférieure ou égale à la distance de détection prédéterminée, si le signal de blocage représentatif de l'immobilisation du véhicule est reçu par les moyens de contrôle 6 du quai 1, et si les moyens de commande à actionnement manuel sont actionnés. Ainsi, la probabilité de chute du quai de l'opérateur est fortement réduite.

En outre, l'ouverture du rideau 3 est possible alors que le véhicule routier n'est pas équipé de moyens de contrôle interagissant avec les moyens de contrôle du quai 1.

Dans l'exemple qui vient d'être décrit, durant l'étape 20, les moyens de détection détectent la présence de la semi-remorque 2 et déterminent la distance minimale entre celle-ci et le quai 1. En variante, à l'étape 20, les premiers moyens de détection 10 pourraient détecter uniquement la présence de la semi-remorque 2a à proximité du quai 1 à l'étape 20, et le procédé pourrait se poursuivre directement à l'étape 22 sans exécuter l'étape 21, et se poursuivre ensuite comme décrit précédemment à partir de l'étape 22.

La figure 4 illustre schématiquement un deuxième exemple des moyens 11 à actionnement manuel assurant le blocage en position du véhicule.

Les moyens 11 comprennent au moins une cale 30 comportant des deuxièmes moyens de détection 31.

Les deuxièmes moyens de détection 31 comprennent par exemple un capteur pression.

Lorsque la cale est montée par l'opérateur OP contre une des roues du véhicule routier, les deuxièmes moyens de détection 31 détectent une variation de pression exercée par la roue sur la cale 30 et émettent le signal de blocage Sb.

L'opérateur OP peut monter plusieurs cales 30, chaque cale étant montée contre une roue différente du véhicule routier.

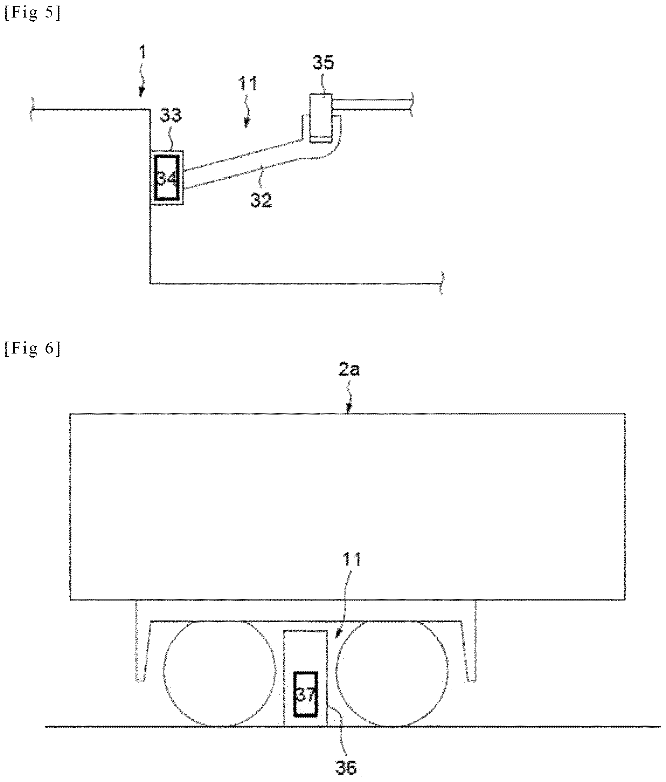

La figure 5 illustre schématiquement un troisième exemple des moyens 11.

Les moyens de blocage 11 comprennent un crochet 32 comportant une base 33 fixée au quai 1 et des deuxièmes moyens de détection 34.

Le crochet 32 est reliée à la base 33 par une liaison pivot et est destiné à être inséré sur une barre anti-encastrement 35 du véhicule routier.

Lorsque le crochet 32 est inséré sur la barre anti-encastrement 35 du véhicule routier, les deuxièmes moyens de détection 34 émettent le signal de blocage Sb.

Les deuxièmes moyens de détection 34 comportent par exemple un contacteur se fermant lorsque le crochet 32 est insérée sur la barre anti-encastrement.

La figure 6 illustre schématiquement un quatrième exemple des moyens 11.

Les moyens 11 comprennent une barre 36 comportant des deuxièmes moyens de détection 37.

Lorsque la barre d'essieu 36 est montée entre deux roues du véhicule routier, les moyens de détection 37 émettent le signal de blocage Sb. Les deuxièmes moyens de détection 37 comportent par exemple un contacteur qui se ferme lorsque la barre est insérée entre les deux roues. La barre peut être montée manuellement ou faire partie d'un système automatique de blocage de roues équipant le quai.

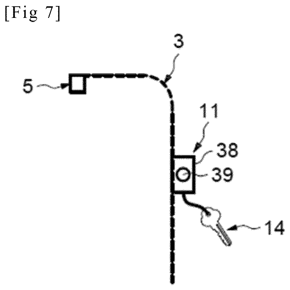

La figure 7 illustre schématiquement un cinquième exemple des moyens 11.

Les moyens 11 comprennent un crochet 38 disposé sur le rideau 3 et comportant des deuxièmes moyens de détection 39.

Lorsque la clé de démarrage 14 du véhicule routier est montée sur le crochet 38, les deuxièmes moyens de détection 39 émettent le signal de blocage Sb.

Les deuxièmes moyens de détection 39 comportent par exemple un capteur de force détectant la force exercée par la clé de démarrage 14 sur le crochet 38.

Dans les exemples de réalisation illustré, l'équipement du quai 1 est un rideau coulissant. Alternativement, l'équipement peut être une passerelle montée mobile à rotation par rapport au quai entre une position verticale de non-utilisation et une position abaissée horizontale de chargement/déchargement.

## Revendications

1. Procédé de commande d'un équipement (3) de quai de chargement (1) qui est mobile entre une position de non-utilisation et une position de chargement/déchargement, le procédé comprenant :
- une étape de détection d'un véhicule routier (2a, 2b) de transport de marchandises par des premiers moyens de détection (10) disposés sur le quai de chargement,
- une étape d'émission d'un signal d'initialisation (Sinit) par des moyens d'émission (8) disposés sur le quai lorsque le véhicule routier est détecté par les moyens de détection (10),
- une étape d'émission d'un premier signal (S1) par des moyens de contrôle (6) du déplacement de l'équipement disposés sur le quai lorsque des moyens de réception disposés sur le quai ne réceptionnent pas un signal d'identification émis par le véhicule en réponse au signal d'initialisation (Sinit) pendant une durée prédéterminée qui débute à l'émission dudit signal d'initialisation,
- après la réception du premier signal (S1) par une interface homme machine (13), une étape d'immobilisation manuelle du véhicule,
- une émission d'un signal de blocage (Sb) par des deuxièmes moyens de détection (12a; 31 ; 34 ; 39) lorsque le véhicule est immobilisé,
- une étape d'actionnement manuel de moyens de commande (4) à actionnement manuel pour commander le déplacement de l'équipement (3) de la position de non-utilisation vers la position de chargement/déchargement, et
- une étape de déplacement de l'équipement (3) vers la position de chargement/déchargement lors de l'actionnement manuel des moyens de commande, uniquement si le signal de blocage (Sb) est reçu par les moyens de contrôle (6) du quai et si la distance minimale entre le véhicule et le quai déterminée par les moyens de détection (10) est inférieure ou égale à une distance de détection prédéterminée.

2. Procédé selon la revendication 1, dans lequel le signal d'initialisation (Sinit) est émis par les moyens d'émission (8) disposés sur le quai lorsqu'en outre la distance minimale déterminée par les moyens de détection (10) est inférieure ou égale à la distance de détection prédéterminée.

3. Procédé selon la revendication 1 ou 2, dans lequel l'étape d'immobilisation manuelle du véhicule comprend la mise en oeuvre de moyens (11) assurant le blocage en position du véhicule.

4. Procédé selon l'une des revendications 1 à 3, dans lequel l'étape d'immobilisation manuelle comprend l'insertion de la clé de démarrage (14) du véhicule dans une boîte à clé (12) disposé sur le quai (1), la fermeture de la boîte à clé, et l'émission du signal de blocage (Sb) par les deuxièmes moyens de détection (12a) incorporés dans la boîte à clé (12) lorsque la clé est à l'intérieur de la boîte à clé et la boîte à clé est verrouillée.

5. Procédé selon l'une des revendications 1 à 3, dans lequel l'étape d'immobilisation manuelle comprend le montage d'au moins une cale (30) contre une des roues du véhicule, et l'émission du signal de blocage (Sb) par les deuxièmes moyens de détection (31) disposés sur ladite cale lorsque ladite cale est en contact avec ladite roue.

6. Procédé selon l'une des revendications 1 à 3, dans lequel l'étape d'immobilisation manuelle comprend l'insertion d'au moins un crochet (32) fixé au quai (1) sur une barre anti-encastrement (35) du véhicule, et l'émission du signal de blocage (Sb) par les deuxièmes moyens de détection (34) disposés sur ledit crochet lorsque le crochet est accroché à la barre anti-encastrement.

7. Procédé selon l'une des revendications 1 à 3, dans lequel l'étape d'immobilisation manuelle comprend la disposition d'une barre (36) entre deux roues du véhicule, et l'émission du signal de blocage (Sb) par les deuxièmes moyens de détection (37) disposés sur ladite barre lorsque ladite barre d'essieu est disposée entre les deux roues.

8. Procédé selon l'une des revendications 1 à 3, dans lequel l'étape d'immobilisation manuelle comprend le montage de la clé de démarrage (14) du véhicule (2a, 2b) sur un crochet (38) disposé sur l'équipement (3), et l'émission du signal de blocage (Sb) par les deuxièmes moyens de détection (39) disposés sur le crochet lorsque la clé est montée sur le crochet.

9. Procédé selon l'une des revendications 1 à 8, dans lequel les moyens de détection (10) délivrent un signal d'alarme lorsque la valeur absolue de la dérivée temporelle de la distance entre le véhicule (2a, 2b) accosté au quai et immobilisé est supérieure à un seuil d'alarme prédéterminé.

10. Procédé selon l'une des revendications 1 à 9, dans lequel les moyens de détection (10) déterminent en permanence la distance minimale entre le véhicule et le quai.

11. Procédé selon l'une des revendications 1 à 10, dans lequel l'équipement du quai (1) de chargement comprend un rideau (3) de fermeture de l'accès au quai de chargement mobile entre une position ouverte de chargement/déchargement et une position fermée abaissée de non-utilisation.

12. Procédé selon l'une des revendications 1 à 10, dans lequel l'équipement du quai (1) de chargement comprend une passerelle de chargement mobile entre une position abaissée horizontale de chargement/déchargement et une position relevée rangée de non-utilisation.

13. Dispositif de commande d'un équipement (3) de quai de chargement (1) qui est mobile entre une position de non-utilisation et une position de chargement/déchargement, le dispositif comprenant :
- des premiers moyens de détection (10) disposés sur le quai de chargement et configurés pour détecter un véhicule routier de transport de marchandises (2a, 2b),
- des moyens d'émission (8) disposés sur le quai et configurés pour émettre un signal d'initialisation (Sinit) lorsque le véhicule routier est détecté par les moyens de détection (10),
- des moyens de réception (9) disposés sur le quai,
- des moyens de contrôle (6) du déplacement de l'équipement qui sont disposés sur le quai et configurés pour émettre un premier signal (S1) lorsque les moyens de réception (9) disposés sur le quai ne réceptionnent pas un signal d'identification émis par le véhicule en réponse au signal d'initialisation pendant une durée prédéterminée qui débute à l'émission dudit signal d'initialisation,
- une interface homme machine (13) configurée pour recevoir le premier signal (S1) et interagir avec un opérateur (OP) du quai,
- des deuxièmes moyens de détection (12a ; 31 ; 34 ; 39) configurés pour émettre un signal de blocage (Sb) lorsque le véhicule est immobilisé,
- des moyens de commande à actionnement manuel (4) disposés sur le quai et configurés pour commander le déplacement de l'équipement (3) de la position de non-utilisation vers la position de chargement/déchargement,
- les moyens de contrôle (6) du déplacement de l'équipement étant en outre configurés pour rendre opérant l'actionnement manuel des moyens de commande (4) pour déplacer l'équipement (3) de la position de non-utilisation vers la position de chargement/déchargement, lorsque le signal de blocage a été réceptionné par les moyens de contrôle du quai et si la distance minimale entre le véhicule et le quai déterminée par les moyens de détection (10) est inférieure ou égale à une distance de détection prédéterminée.

14. Dispositif selon la revendication 13, comprenant en outre des moyens (11) à actionnement manuel assurant le blocage en position du véhicule.
